# EUROPEAN PATENT APPLICATION

(11) **EP 2 323 019 A1**
(43) Date of publication of application: **18.05.2011**
(21) Application number: 09811531.4
(22) Date of filing: 27.08.2009
(51) Int. Cl.: G06F 3/041, H04M 1/00

(54) **GESTURE INPUT OPERATION DEVICE, METHOD, PROGRAM, AND PORTABLE DEVICE**

(30) Priority: 03.09.2008 JP 2008226492
(71) Applicant: NEC Corporation, Minato-ku Tokyo 108-8001 (JP)
(72) Inventor: MIURA, Nariaki, Tokyo 108-8001 (JP)
(74) Representative: Vossius & Partner
(86) International application number: PCT/JP2009/065378
(87) International publication number: WO 2010/027006

(57) **Abstract**

An operation is facilitated and an increase of processing load is suppressed by the input to the entire touch panel on a screen.

A gesture operation input device for performing the input operation of information on a display screen via a pointing device is provided with a cell setting unit 102A for setting a plurality of cells on the display screen and numbering each of the cells, a gesture route rule storage unit 103A for storing a gesture route rule formed by the numbers of the cells traced in a predefined route on the display screen for a gesture including graphics and signs, an operation route information storage unit 103B for temporarily storing the numbers of designated cells as the route information of input operation when the gesture is drawn on the display screen and a plurality of the cells set on the display screen are designated by the pointing device, and a gesture judgment unit 102A for judging the route information of input operation as the gesture drawn on the display screen when the stored gesture route rule and the stored route information of input operation are compared and accorded.

## Description

### TECHNICAL FIELD

The present invention relates to a portable device equipped with a pointing device. In particular, the present invention relates to a gesture input operation device, method, program, and a portable device, which can contribute to miniaturization and make input operation easy.

### BACKGROUND ART

In these days, touch panel is being adopted for portable devices including PDAs (Personal Digital Assistant), cellular phones, and portable players.

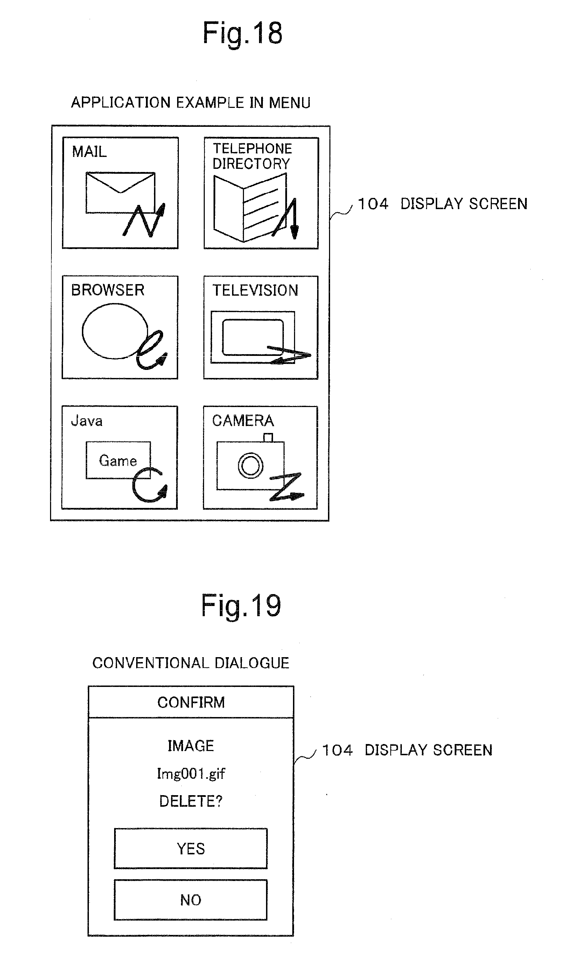

Fig. 19 is a diagram showing an outline of a dialogue between a related portable device and a user. As shown in the diagram, for the portable device, in the case of deleting an image on the screen, the selection operation is performed by touching on a button of "Yes" or "No" that are indicated on the screen for a message of "Delete the image?".

However, because indication of the buttons of the portable device cannot be enlarged since the screen size is limited, a small area needs to be touched and there is a problem of tendency to cause operational errors. In addition, in the case of enlarging the display area of the button, there is a problem of decrease of items that can be selected.

The following technologies are available in relation to a touch panel in order to overcome these issues.

For example, the patent document 1 discloses a car-mounted information terminal aimed at correct operation according to instruction of user, even when it is difficult for the user to achieve an accurate operation of touch panel. Specifically, in order to achieve the purpose, the patent document 1 discloses a technology of detecting a change of touch position of the touch panel operation. For the terminal using this technology, when a touch position does not change, it executes a process of content corresponding to a displayed content at touch position of the touch panel operation. On the other hand, when the touch position changes, the terminal recognizes an operation gesture from the trajectory and executes a process of content corresponding to the operation gesture.

In addition, patent document 2 discloses a command input method in a touch panel display of a car navigation device as an example. For the command input method, even if scroll buttons, command buttons and so on are overlapped and displayed on the maps or the like, there are no mischiefs such as hiding a map or the like displayed in lower layer. This is because, when a plurality of line drawings such as a line segment and a triangle is assigned to commands, and a user draws a line drawing corresponding to a command, on the touch panel display using a finger, the line drawing is recognized and the corresponding command is executed.
[Patent document 1] Japanese Patent Application Laid-Open No 2007-145106
[Patent document 2] Japanese Patent Application Laid-Open No 1999-085398

### DISCLOSURE OF THE INVENTION

### [Problem the invention tries to settle]

However, in the above-mentioned patent document 1, an operation gesture is recognized from a trajectory of a touch position, and when the prior art of character recognition and graphic pattern recognition are applied for recognizing the operation gesture, there is a problem that processing load becomes enormous.

In addition, in the above-mentioned patent document 2, a sign like a line drawing or a triangle is recognized, and when a pertinent art of graphic pattern recognition is used, there is a problem that processing load becomes also enormous.

Accordingly, because these technology burdens heavily for portable devices to which resource of processing capability, storage capacity, and power supply capacity are limited, it is difficult to apply to those.

In view of the above-mentioned problems, an object of the present invention is to provide a gesture input operation device, a method, a program, and a portable device, which can easily input the operation using a whole display screen via a pointing device, suppress excessive increase of processing load, and contribute to miniaturization.

### TECHNICAL SOLUTION

In order to achieve the object, the present invention will have the following features.

A gesture operation input device of the present invention is the device which executes an input operation of information on a display screen via a pointing device, wherein at least two cells to which identification information is attached respectively are set on said display screen, comprises a gesture route rule storage unit which stores a gesture route rule that defines a route of said cell which is tracing on said display screen at an input operation by said identification information on each cell for a gesture including graphics and signs, an operation route information storage unit which temporarily stores said identification information of each designated cell as the route information of input operation when said cell in said display screen is successively selected by said pointing device in accordance with input of the gesture on said display screen, and a gesture judgment unit which judges that a gesture drawn on said display screen is the gesture defined by said gesture route rule in a case when said gesture route rule and the route information of said input operation are compared and accorded.

Furthermore, a gesture operation input method of the present invention performing an input operation of information on a display screen via a pointing device, comprises a step which sets at least two cells wherein identification information are respectively assigned thereof on said display screen, a step which temporarily stores said identification information on each designated cell as a route information of input operation when said cell in said display screen is successively designated by said pointing device in accordance with input of the gesture on said display screen, and a step which compares the gesture route rule which defines a traced route of the said cell on said display screen at the input operation by said identification information on each cell with the route information on said input operation, and judges that the gesture drawn on said display screen is the gesture defined by said gesture route rule when those accord, for the gesture including graphics and signs.

Furthermore, a gesture operation input program of the present invention performing an input operation of information on a display screen via a pointing device, comprises a procedure which sets at least two cells wherein identification information are respectively assigned thereof on said display screen, a procedure which temporarily stores said identification information on each designated cell as a route information of input operation when said cell in said display screen is successively designated by said pointing device in accordance with input of the gesture on said display screen, and a procedure which compares the gesture route rule which defines a traced route of the said cell on said display screen at the input operation by said identification information on each cell with the route information on said input operation, and judges that the gesture drawn on said display screen is the gesture defined by said gesture route rule when those accord, for the gesture including graphics and signs.

Furthermore, a portable device of the present invention is the device which executes an input operation of information on a display screen via a pointing device, wherein at least two cells to which identification information is attached respectively are set on said display screen, comprises a gesture route rule storage unit which stores a gesture route rule that defines a route of said cell which is tracing on said display screen at an input operation by said identification information on each cell for a gesture including graphics and signs, an operation route information storage unit which temporarily stores said identification information of each designated cell as the route information of input operation when said cell in said display screen is successively selected by said pointing device in accordance with input of the gesture on said display screen, and a gesture judgment unit which judges that a gesture drawn on said display screen is the gesture defined by said gesture route rule in a case when said gesture route rule and the route information of said input operation are compared and accorded.

### [Effect of the invention]

As described above, according to the present invention, a gesture input operation device, a method, a program, and a portable device, which can easily input the operation using a whole display screen via a pointing device, suppress excessive increase of processing load, and contributes to miniaturization, can be provided.

### BRIEF DESCRIPTION OF THE DRAWINGS

Fig. 1 is a block diagram showing a schematic configuration of a gesture operation input device according to embodiments of the present invention.
Fig. 2 is a diagram showing an example of cell partition of a display screen 104 in Fig. 1.
Fig. 3 is a diagram showing an example of judging a gesture when a finger traces on a screen of the display screen 104 from upper right position to center position.
Fig. 4 is a flowchart showing an example of series of operations of the gesture operation input device 100 in Fig. 1.
Fig. 5 is a diagram showing a concrete example of a gesture route rule of "circle-sign" that is stored in a gesture route rule storage unit 103A.
Fig. 6 is a diagram showing a concrete example of a gesture route rule of "crescendo-sign" that is stored in the gesture route rule storage unit 103A.
Fig. 7 is a diagram showing a concrete example of a gesture route rule of "decrescendo-sign" that is stored in the gesture route rule storage unit 103A.
Fig. 8 is a diagram showing a concrete example of a gesture route rule of "logical sum-sign" and "logical product-sign" that are stored in the gesture route rule storage unit 103A.
Fig. 9 is a diagram showing a concrete example of a gesture route rule of "Z-sign" and "N-sign" that are stored in the gesture route rule storage unit 103A.
Fig. 10 is a diagram showing a concrete example of a gesture route rule of "e-sign" that is stored in the gesture route rule storage unit 103A.
Fig. 11 is a diagram showing a gesture of the gesture route rule that is stored in the gesture route rule storage unit 103A in Fig. 5, which is drawn visually on the matrix-type cell of three lines by three columns.
Fig. 12 is a diagram showing a gesture of the gesture route rule that is stored in the gesture route rule storage unit 103A in Fig. 6, which is drawn visually on the matrix-type cell of three lines by three columns.
Fig. 13 is a diagram showing a gesture of the gesture route rule that is stored in the gesture route rule storage unit 103A in Fig. 7, which is drawn visually on the matrix-type cell of three lines by three columns.
Fig. 14 is a diagram showing a gesture of the gesture route rule that is stored in the gesture route rule storage unit 103A in Fig. 8, which is drawn visually on the matrix-type cell of three lines by three columns.
Fig. 15 is a diagram showing a gesture of the gesture route rule that is stored in the gesture route rule storage unit 103A in Fig. 9, which is drawn visually on the matrix-type cell of three lines by three columns.
Fig. 16 is a diagram showing a gesture of the gesture route rule that is stored in the gesture route rule storage unit 103A in Fig. 10, which is drawn visually on the matrix-type cell of three lines by three columns.
Fig. 17 is a diagram showing an example of applying the gesture input operation device to a portable device and executing a dialogue between a user and the portable device.
Fig. 18 is a diagram showing an example of applying the gesture input operation device to a portable device and executing a menu operation by a user on the portable device.
Fig. 19 is a diagram showing an outline of dialogue between a conventional portable device and a user.
Fig. 20 is a block diagram showing a schematic configuration of the gesture operation input device according to third embodiment of the present invention.

### BEST MODE FOR CARRYING OUT THE INVENTION

Hereinafter, embodiments of the present invention are described with reference to the drawings.

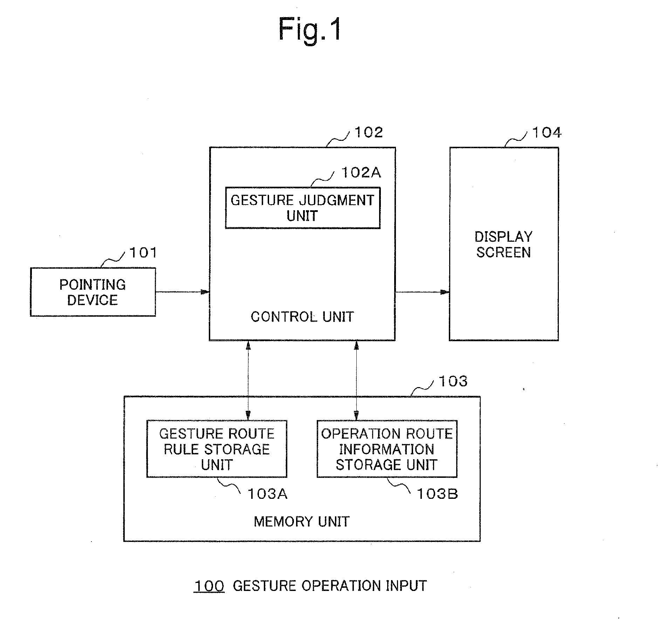

Fig. 1 is a block diagram showing a schematic configuration of a gesture operation input device according to an embodiment of the present invention.

As shown in the diagram, the gesture operation input device 100 includes a pointing device 101, a control unit 102, a memory unit 103, and a display screen 104. The control unit 102 includes a gesture judgment unit 102A, and the memory unit 103 includes a gesture route rule storage unit 103A and an operation route information storage unit 103B.

At least two cells to which identification information is attached respectively are set to the display screen 104. The user inputs a gesture by drawing various figures and signs on the display screen 104 via the pointing device 101. At the input operation of the gesture, the pointing device successively designates the cells while the display screen is traced. The identification information on each designated cell is stored temporarily in the operation route information storage unit 103B as route information of the input operation.

In addition, concerning various gestures which will be inputted, in advance, the cell routes which are traced on said display screen when gestures are inputted are defined as said identification information of each cell, and stored in the gesture route rule storage unit 103A as a gesture route rule.

When there is an input operation from the pointing device, a gesture judgment unit 102B compares the route information of input operation with the gesture route rule, and judges that the gesture is inputted if it accords with one of the defined gesture routes.

As shown in the above configuration, according to the embodiment, input can be made easy by an operation using the whole display screen 104 via the pointing device, and also processing load can be decrease considerably compared with recognizing a trajectory itself and a figure itself of the inputted gesture.

Next, a composition in detail and an example of operation of another embodiment of the present invention is described. The gesture operation input device which is shown in Fig. 1 is to be applied to a portable device, and the pointing device 101 includes a touch panel. The control unit 102 includes CPUs (Central Processing Unit), and processes of the gesture judgment unit 102A are executed by software. The memory unit 103 includes RAMs (Random Access Memory) and ROMs (Read Only Memory). The software executed by the gesture judgment unit 102A is stored in ROMs, and also the gesture route rule storage unit 103A is composed of ROMs. In addition, a setting of the cell partition of the display screen 104 and identification information on each cell are also stored in ROMs. Further, rewritable-ROMs can be used for the ROMs for storing the above-mentioned data, so as to re-configure according to necessities. On the other hand, the operation route information storage unit 103B includes RAMs. The display screen 104 includes LCDs (Liquid Crystal Display), and the touch panel which is the pointing device 101 is installed on the display screen 104.

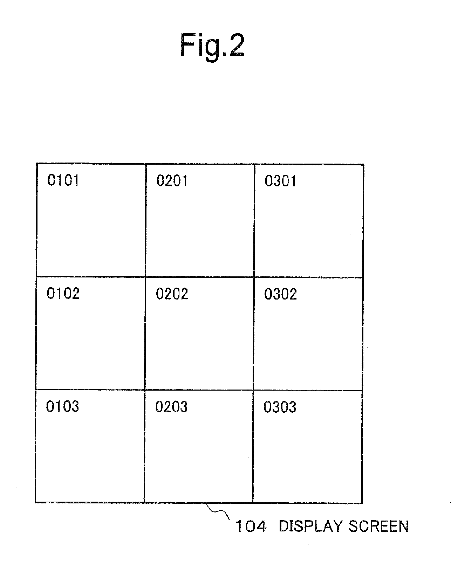

Fig. 2 is the diagram showing an example of cell partition of the display screen 104 in Fig. 1. As shown in the diagram, the display screen 104 is partitioned into a matrix-type cell of three lines by three columns as an example, and 4 digits of matrix numbers 0101, 0102, 0103 ..., 0301, 0302, and 0303 are assigned to each cell as the identification information as an example. First, the following describes an outline of gesture judgment as a simple example.

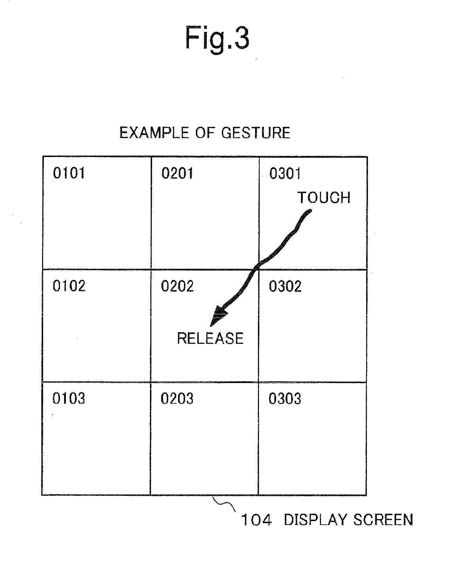

Fig. 3 is the diagram showing an example of judging a gesture of tracing by a finger from upper right to center, on the screen of the display screen 104 on which the touch panel is installed. As an example, a case of judging a gesture of tracing on the display screen 104 with a finger as a gesture of tracing from upper right cell 0301 to center cell 0202 is described.

As a simplest gesture route rule corresponding to the gesture, matrix number 0301 and 0202 are stored in the gesture route rule storage unit 103a in advance. However, because there is a small fluctuation of the input operation of user on the touch panel, when the finger traces between the cells 0301 and 0202, it should be also considered that neighbored cell 0201 or 0302 is traced. For example, in Fig. 3, the cell 0201 is traced. Accordingly, 0201 and 0302 are added to the gesture route rule corresponding to the gesture, and it is stored in the gesture route rule storage unit 103A as the data of (0301, x0302, x0201, 0202). Here, the matrix number x0302 and x0201 which start with "x" are the matrix number of bypath routes caused by an input operational fluctuation of the gesture, for determining that the neighbored cell 0302 or 0201 may be traced while cells 0301 and 0202 are traced.

When a finger of user traces on the display screen 104, the touch panel which is the pointing device 101 designates the cells which the finger touched. The route of the matrix number of the designated cell is stored in the operation route information storage unit 103B. When the user inputs the gesture tracing the cells 0301 and 0202 with a small fluctuation, the followings indicate several typical examples of the route of the matrix number of cells that are to be stored in the operation route information storage unit 103B:

| | |
|---|---|
| Example 1:0301. 0202 | judgment of accord |
| Example 2: 0301; 0302, 0202 | judgment of accord |
| Example 3: 0301, 0201, 0202 | judgment of accord |
| Example 4: 0301, 0201, 0302, 0202 | judgment of accord |
| Example 5: 0301, 0302, 0201, 0202 | judgment of accord |
| Example 6: 0301, 0202, 0102 | judgment of disaccord |
| Example 7: 0301, 0202, 0203 | judgment of disaccord. |
| Example 8: 0301, 0202, 0103 | judgment of disaccord |
| Example 9: 0202, 0301 | judgment of disaccord |
| Example 10: 0201, 0202 | judgment of disaccord |
| Example 11: 0302, 0202 | judgment of disaccord |
| Example 12: 0301, 0202, 0201 | judgment of disaccord |
| Example 13: 0301, 0202, 0302 | judgment of disaccord |
| Example 14: 0201, 0301, 0202 | judgment of disaccord |
| Example 15: 0302, 0301, 0202 | judgment of disaccord |
| Example 16: 0301, 0302, 0202, 0201 | judgment of disaccord |
| Example 17: 0301, 0201, 0202, 0302 | judgment of disaccord |

In the operation route information storage unit 103B, one of the routes of above examples is generated and stored as the operation route information for the gesture which traces the cells 0301 and 0202.

The gesture judgment unit 102A of the control unit 102 compares the gesture route rule (0301, x0302, x0201, 0202) which is stored in the gesture route rule storage unit 103A with the operation route information stored in the operation route information storage unit 103B. When both of them are compared, for those numbers of the operation route information that accords with the matrix number x0302 and x0201 having "x", these are set as the bypath routes. The gesture judgment unit 102A compares the matrix number of the gesture route rule of the matrix number 0301 and 0202 including the matrix number of the operation route information on the bypath route, and judges whether those accord or disaccord. The gesture judgment unit 102A judges whether the operation route information stored in the operation route information storage unit 103B accords with the gesture based on result of the judgment.

For the above examples 1-17, the gesture judgment unit 102A judges the above examples 1-5 "accord", and judges the examples 1-5 accord with the gesture which is stored the gesture route rule storage unit 103A. On the other hand, the gesture judgment unit 102A judges the above examples 6-17 "disaccord", and judges the examples 6-17 disaccord with the gesture which is stored the gesture route rule storage unit 103A

Here, although there are matrix numbers with "x" in the gesture route rule stored in the gesture route rule storage unit 103A for the above examples of 11-17, because there is no matrix number with "x" between the matrix numbers without "x", the examples of 11-17 are not judged the bypath routes. For this reason, these routes are judged disaccord.

Similarly, in the above example 10, although there is a matrix number with "x" in the gesture route rule stored in the gesture route rule storage unit 103A, because it is not between the matrix number without "x", 0201 is not judged the bypath route. For this reason, this route is judged disaccord.

Thus, while permitting a fluctuation of the input operation, the permissions irrespective of the fluctuation are excluded.

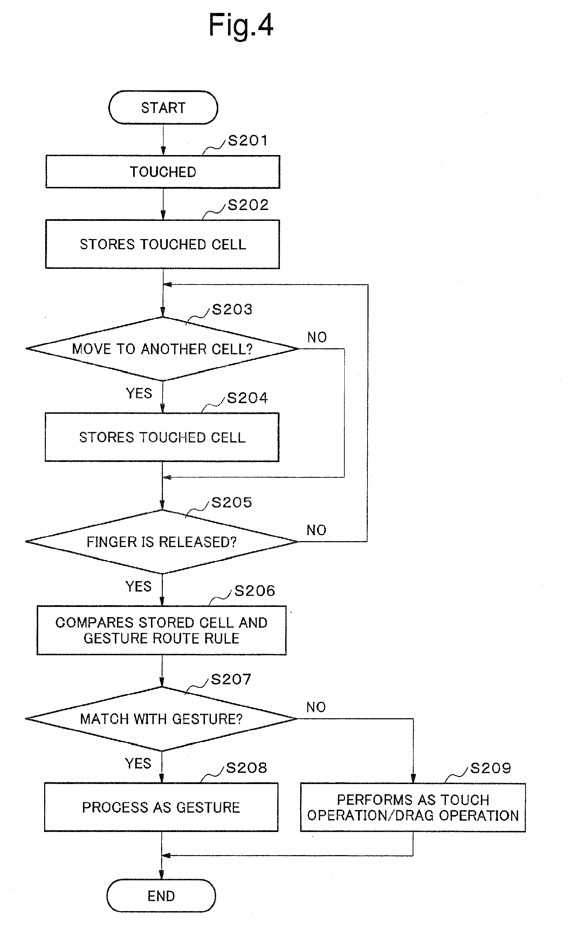

Fig. 4 is the flowchart showing an example of series of operations of the gesture operation input device 100 in Fig. 1.

As shown in the flowchart, in Step S201, a finger is supposed to touch on the display screen 104 to which cells on the matrix are set by the matrix setting unit 102A.

In Step S202, the control unit 102 designates a cell which is touched on the display screen 104 using the touch panel of the pointing device 101, and stores the matrix number of the designated cell in the operation route information storage unit 103B.

In Step S203, the control unit 102 judges whether the finger moved to a different cell or not by a change of the matrix number of the cell which is designated by the touch panel of the pointing device 101. When it is not moved to a different cell, step is advanced to Step S205.

In Step S204, when the finger has moved to a different cell, the control unit 102 stores a route of the touched matrix number of the cell in the operation route information storage unit 103B.

In Step S205, the control unit 102 judges whether the touched finger is released from the display screen 104. If the finger is not released, step is returned to Step S203.

In Step S206, the gesture judgment unit 102B compares the route of the matrix number of cell stored in the operation route information storage unit 103B with the gesture route rule stored in the gesture route rule storage unit 103A.

In Step S207, when there are no accorded gesture route rules in the gesture route rule storage unit 103A in the above-mentioned comparison, the gesture judgment unit 102B judges that the route of the matrix number of cell stored in the operation route information storage unit 103B is not the gesture and step is advanced to Step S209.

In Step S208, when an accorded gesture route rule exists in the gesture route rule storage unit 103A in the above-mentioned comparison, the gesture judgment unit 102B judges that the route of the matrix number of cell stored in the operation route information storage unit 103B is a gesture, processes it as the predetermined gesture input, and the process is finished.

In Step S209, the designated touch is supposed a normal touch operation or a drag operation, and the process is finished.

Next, an embodiment of the present invention is described by an example in detail of the gesture route rule stored in the gesture route rule storage unit 103A.

At first, the matrix-type cell of three lines by three columns, which is shown in Fig. 2, is supposed to be set by the gesture judgment unit 102A on the display screen 104, and a matrix number is assigned to the corresponding cell.

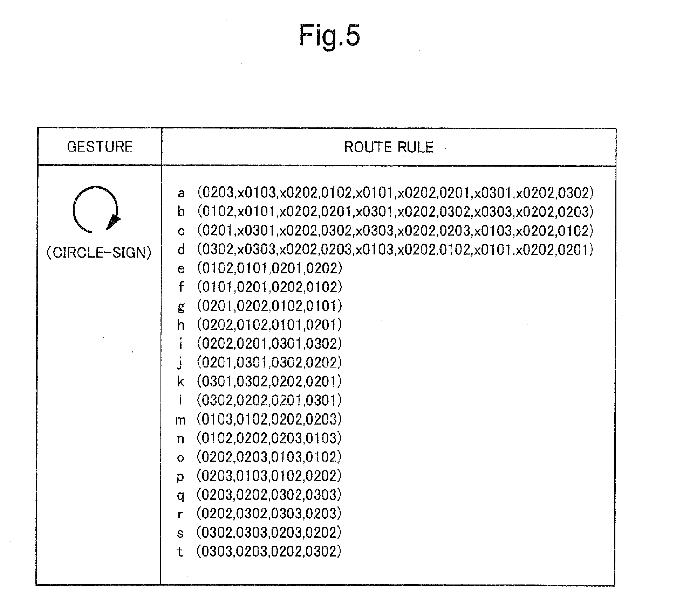

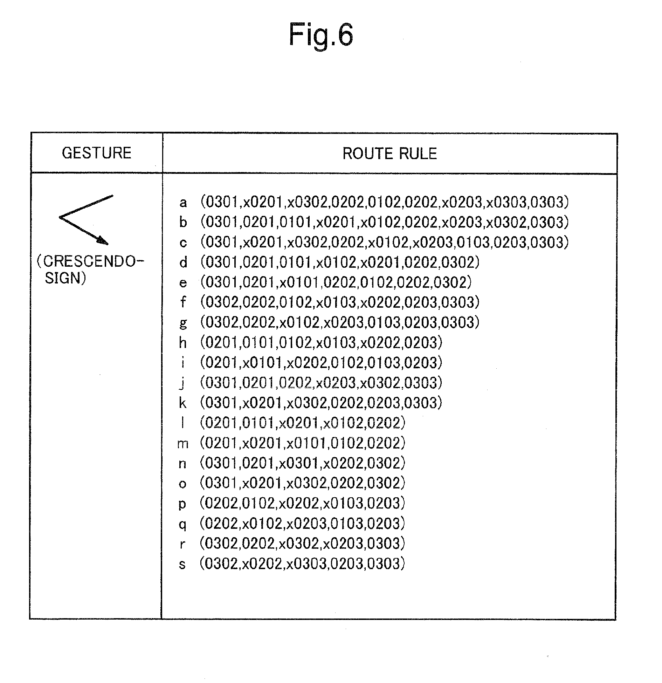

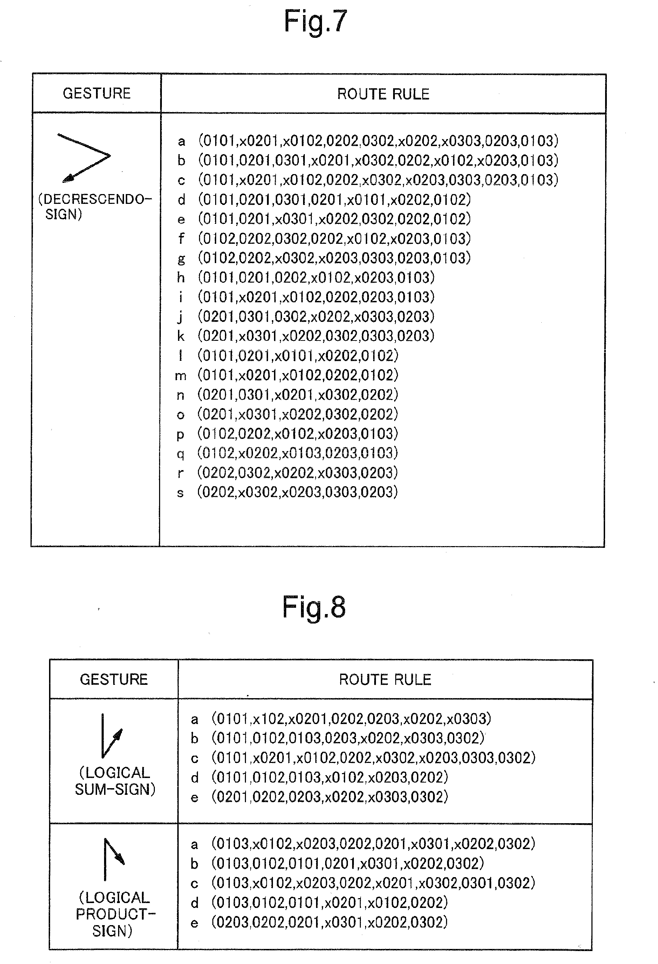

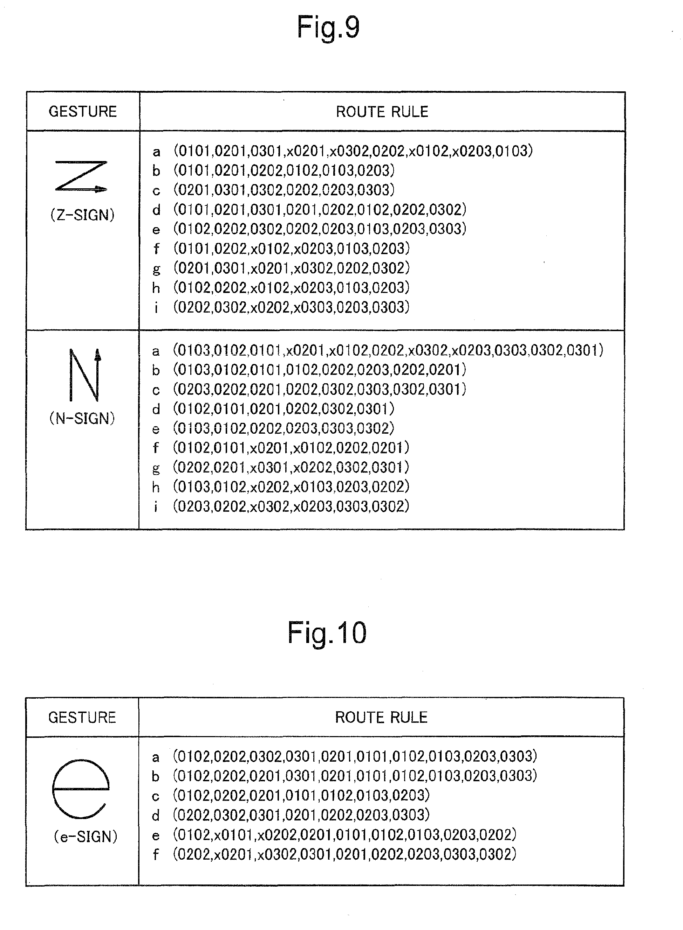

For "circle-sign", "crescendo-sign", "decrescendo-sign", "logical sum-sign", "logical product-sign", "Z-sign", "N-sign", and "e-sign" as shown in Figs. 5-10, various variations for each gesture route rule are stored in the gesture route rule storage unit 103A respectively.

Various variations of the route rule on each gesture is set, because it is difficult to trace the gesture with the same shape whenever the user draws a gesture on the display screen 104 with a finger and it may trace a gesture with a small different shape.

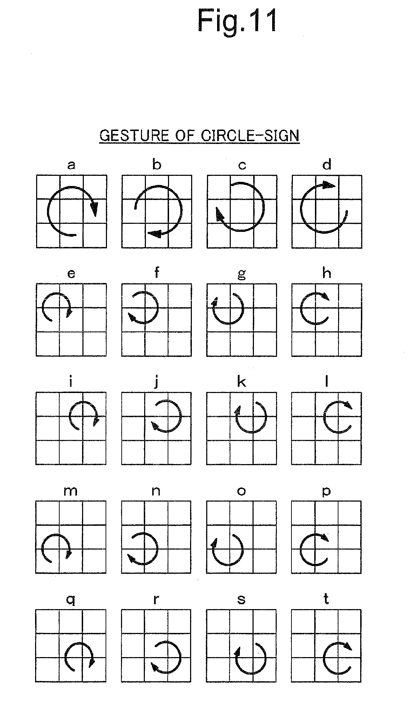

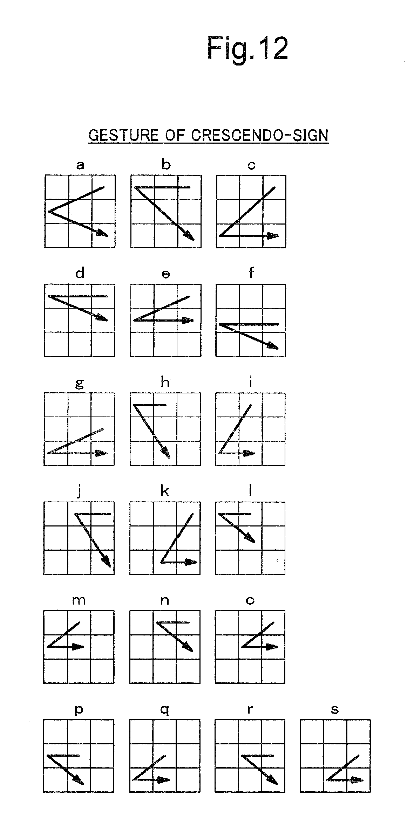

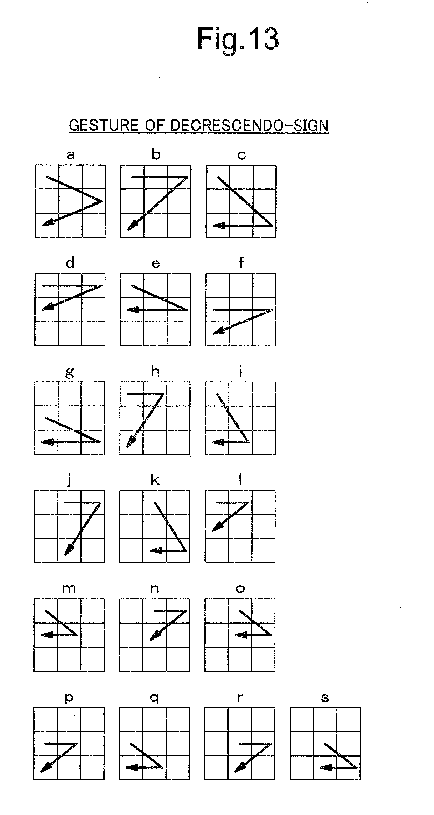

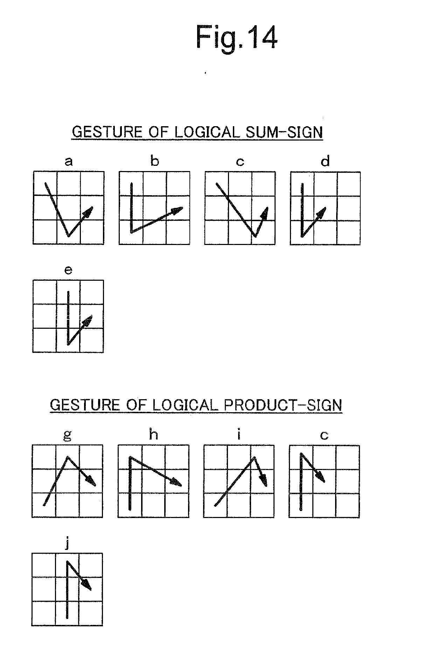

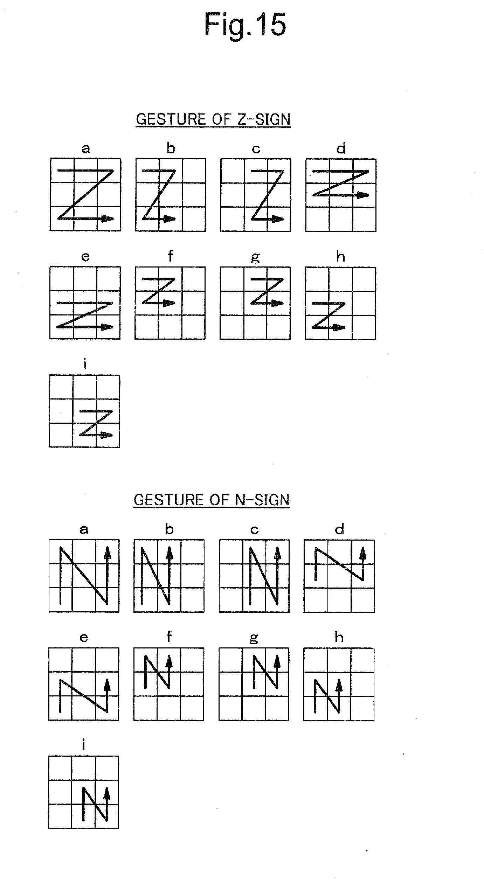

Figs. 11-16 are the diagrams which visually draw a gesture on the matrix-type cell of three lines by three columns of the gesture route rule of Figs. 5-10 that are stored in the gesture route rule storage unit 103A respectively.

The followings describe an embodiment of a portable device including the gesture operation input device 100 which has the gesture route rule storage units 103A in which the gesture route rule shown in Figs. 5-10 is stored.

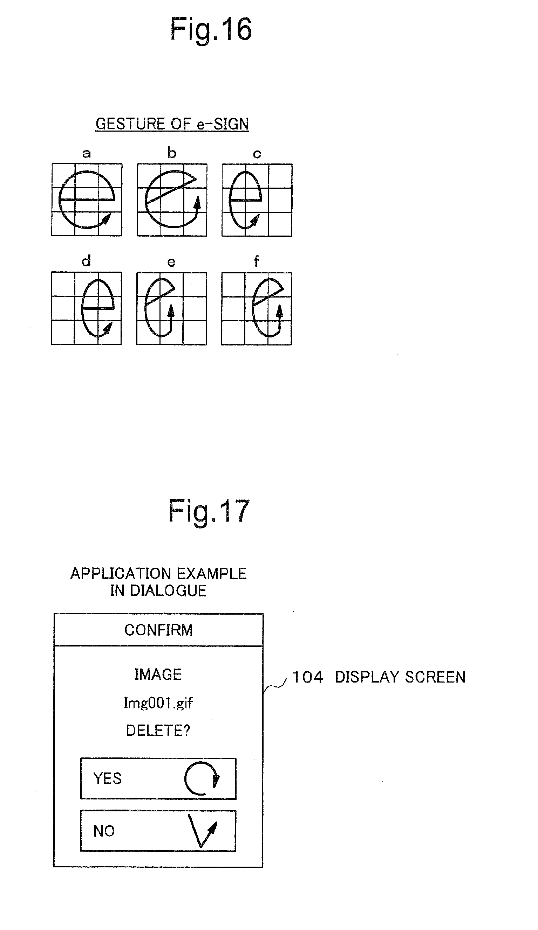

Fig. 17 is the diagram showing an example of applying the gesture input operation device to the portable device, and executing a dialogue between a user and the portable device. Here, an example of performing a dialogue of a confirmation concerning deletion of an image between the user and the portable device on the display screen 104 of the portable device is indicated. When a reply of "Yes" or "No" by the user is requested for "deplete Image.001gif?", the portable device requests the input operation of a gesture "circle-sign" for "Yes", and requests the input operation of a gesture "logical sum-sign" for "No". The user draws a gesture of "circle-sign" for the selection of "Yes", and draws a gesture of "logical sum-sign" for the selection of "No". After the input operation of the gesture, the gesture is judged based on the flowchart shown in Fig. 4.

In this way, when a sign showing a gesture for the selected icons is designed, a selection by conventional key operation and touch operation can co-exist, and the design is also easy to understand for users. Moreover, because a touch panel can be adopted without seriously changing existing layout, software development cost can be suppressed.

Fig. 18 is a diagram showing an execution example of a menu operation by a user on the portable device to which the gesture input operation device is applied. As shown in the diagram, a plurality of menus such as mail, telephone directory, browser, television, Java (registered trademark), and camera for requesting an input operation of the gesture are indicated on the display screen 104 of the portable device for selection of a menu. For example, "N-sign" is drawn for initiating mail function, "logical product-sign" is drawn for initiating telephone directory function, "e-sign" is drawn for initiating browser function, "decrescendo-sign" is drawn for initiating television function, "circle-sign" is drawn for initiating Java (registered trademark) function, and "Z-sign" is drawn for initiating camera function, respectively. A gesture is judged according to the flowchart of Fig. 4, after input operation of the gesture.

In this way, when a sign showing a gesture for the menu icon is designed, a selection by conventional key operation and touch operation can co-exist. Further, users can easily understand the design. Moreover, because a touch panel is used without seriously modifying existing layout, software development cost can be suppressed. Therefore, according to the embodiment, because the whole touch panel of the display screen 104 can be used for operation, large touch panel area can be set, and it brings merits for the portable device or the like that a delicate operation is not requested and a small button selection with difficulty is not needed.

In addition, because contents of processes (i.e. Step S203 and 204 in Fig. 4) during operation of the pointing device 101 is very simple, a merit that quick operational response is possible for a portable device or the like to which CPU resources are limited is brought.

Further, since a memory size required for the gesture route rule storage unit 103A is very small, even for a gesture operation which goes around twice on the display screen 104, its memory size can be kept within one hundred bytes. Accordingly, even if the gesture route rule storage unit 103A has one hundred kinds of gesture route rule, a calculation shows that total data size is within 10k bytes and it is available for the portable device which has a limitation of capacity for ROM and RAM.

In addition, according to the embodiment, because the whole touch panel can be used for operation, external components for delicate operation such as a touch pen and a like are not required, and an effect that a touch pen and its keeping space can be omitted is given, and both the size and the cost can be reduced.

Moreover, according to the embodiment, because it should draw only a gesture, it is not requested to indicate buttons or lists for a selection on the display screen 104, and it can be applied to another display by omitting drawing of buttons. For example, it is a standard approach for normal terminals to indicate an initiating menu when initiating multi-task and a like at first and then select and initiate a function. However, by using the gesture operation, a mail function by drawing a gesture of "N-sign" on the display screen 104 can be initiated directly while operating other functions in order to initiate the mail function by a gesture of "N-sign", as an example. For a portable device which supports a multi-task function or a cooperative function, content of data and function which is opening at present can be passed to a function initiated by the gesture operation. For example, while a mail function is initiated by a gesture of "N-sign", a smooth user interface can be provided, by initiating the telephone directory function by a gesture of "logical product-sign", and by designating an addressee in the telephone directory which was being operated in advance on the mail address field.

Further, a gesture function can be available simultaneously on a screen on which touch operation and drag operation are available.

Moreover, gesture can be added, deleted, and modified only by modifying contents of the gesture route rule storage unit 103A.

Furthermore, according to the above mentioned embodiment, even though a touch panel is used as an example of the pointing device 101, a mouse can be used as other pointing device by which so-called drag operation (i.e. moving while selecting) is possible. That is; the process from push to release of click-button of the mouse can be judged as a gesture.

In addition, data of the gesture route rule stored in the gesture route rule storage unit 103A may be downloaded from the internet or the like, and also record, add, and modify. Because the contents stored in the gesture route rule storage unit 103A is about 100 bytes of data size per one gesture and has a very simple structure, it is easy to record, add, and modify them.

Further, the display screen 104 can be omitted from the gesture operation input device 100, and a gesture operation input device 100 can be packaged as the device which transmits the gesture operation as a signal from the control unit 102 having the gesture judgment units 102A to a terminal side. This packaged configuration can be sold as a standalone touch device which supports gesture operation judgment.

In addition, it has been described that the display screen 104 is partitioned into a matrix cells of three lines by three columns in Fig. 2. With regard to setting a cell partition of the screen, when number of cells is too small, then the sign pattern which can be inputted is limited, and when number of cells is too large, then the variations and the bypath routes that should be considered are increased and hardware resources are not so efficiently utilized. In a case of matrix of three lines by three columns, it can cope with remarkably various graphics and variations if it compares with matrix of two lines by two columns, and it can be said that it is a cell setting pattern sufficient for drawing simple two-dimensional graphics that are mentioned above.

However, there is no limitation for the number of partitions of the area, and it can be two lines by two columns, four lines by four columns, and ten lines by ten columns according to various applications. In addition, the number of partition of lines and the number of partition of columns do not need to be identical, and it can be three lines by two columns instead of three lines by three columns, as an example. Further, although cell partitioning lines of the matrix of three lines by three columns on the display screen 104 is displayed in Fig. 2, the partitioning lines do not need to be displayed and also the touch panel do not need to be divided physically to each cell.

### [Third embodiment]

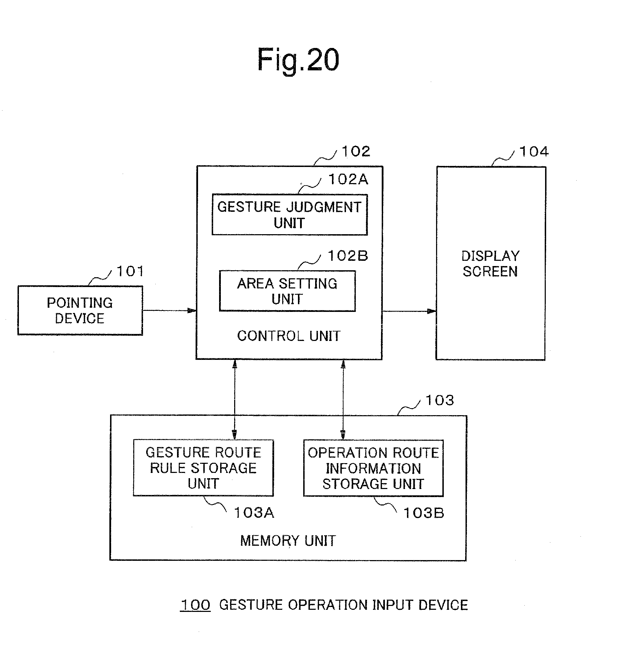

Fig. 20 is the block diagram showing the schematic configuration of the gesture operation input device according to the third embodiment of the present invention. As shown in the diagram, a gesture operation input device 100 includes a pointing devices 101, a control unit 102 having a gesture judgment units 102A and a cell setting units 102B, a memory unit 103 having a gesture route rule storage units 103A and an operation route information storage units 103B, and a display screen 104, and is applied to a portable device.

### [Fourth embodiment]

A gesture operation input device for performing an input operation of information on a display screen via a pointing device is provided with an cell setting unit for setting a plurality of cells on said display screen and numbering each of the cells, a gesture route rule storage unit for storing a gesture route rule formed by numbers of cells traced in a predefined route on said display screen for a gesture including graphics and signs, an operation route information storage unit for temporarily storing numbers of designated cells as route information of the input operation when the gesture is drawn on said display screen and a plurality of the cells set on said display screen are designated by the pointing device, and a gesture judgment unit for judging route information of the input operation as the gesture drawn on said display screen when a gesture route rule stored in said operation route information storage unit and a route information of input operation stored in said operation route information storage unit are compared and accorded.

### [Fifth embodiment]

When an adjacent cell may exist between traced cells due to input operational fluctuation for the gesture route rule which is stored in said gesture route rule storage unit, then the number of cell due to input operational fluctuation is registered between numbers of the tracing cells in the gesture route rule, the number of cell of a route information of a accorded input operation is ignored when the route information of input operation stored in said operation route information storage unit accords with the number of input operational fluctuation cell of the gesture route rule stored in said operation route information storage unit by said gesture judgment unit, and the number of cell of the route information of the input operation excluding ignored number is compared with the number of cell of the gesture route rule excluding number of ignored input operational fluctuation cell.

### [Sixth embodiment]

Said pointing device includes a touch panel or a mouse.

### [Seventh embodiment]

A cell which said cell setting unit sets includes the cell on a matrix of three lines by three columns.

### [Eighth embodiment]

A gesture route rule stored in said gesture route rule storage unit includes a gesture route rule of circle-sign, crescendo-sign, decrescendo-sign, logical sum-sign, logical product-sign, Z-sign, N-sign, and e-sign.

### [Ninth embodiment]

A gesture route rule stored in said gesture route rule storage unit can be recorded, added, and modified via the internet.

### [Tenth embodiment]

A gesture operation input method which performs an input operation of information on a display screen via a pointing device is provided with a step which sets a plurality of cells on said display screen and assigns a number for each cell, a step which temporarily stores designated cell numbers as a route information of input operation when a plurality of cells are assigned in said display screen using said pointing device by drawing a gesture on said display screen, and a step which compares a gesture route rule which is stored the numbers of cells by which predefined route of cell on said display screen is traced with saved route information of input operation, and judges that the gesture drawn on said display screen is the gesture defined by said gesture route rule when those accord concerning the gesture including the graphic and the sign.

### [Eleventh embodiment]

A gesture operation input program which performs an input operation of information on a display screen via a pointing device is provided with a procedure which sets a plurality of cells on said display screen and assigns a number for each cell, a procedure which temporarily stores designated cell numbers as a route information of input operation when a plurality of cells are assigned in said display screen using said pointing device by drawing a gesture on said display screen, and a procedure which compares a gesture route rule which is stored as cell numbers that traces predefined cell-route on said display screen with saved route information of input operation and judges that the gesture drawn on said display screen is the gesture defined by said gesture route rule when those accord concerning the gesture including the graphic and the sign.

### [Twelfth embodiment]

A portable device for performing an input operation of information on a display screen via a pointing device is provided with a cell setting unit which sets a plurality of cells on said display screen and assigns a number for each cell, a gesture route rule storage unit which stores a gesture route rule formed by the numbers of the cells traced in a predefined route on said display screen for a gesture including graphics and signs, an operation route information storage unit which temporarily stores number of designated cell as the route information of input operation when said pointing device selects a plurality of cells that is set on said display screen by drawing a gesture on said display screen, and a gesture judgment unit which judges that the gesture drawn on said display screen is the gesture defined by said gesture route rule in a case when said gesture route rule stored in said operation route information storage unit and the route information on said input operation stored in said operation route information storage unit are compared and accorded.

### [Thirteenth embodiment]

In a case that a dialogue of confirmation of "Yes" or "No" is displayed on said display screen, and the circle-sign is drawn on said display screen, it is judged a circle-sign is drawn and confirms "Yes". And it is judged a logical sum-sign is drawn and confirms "No" when the logical sum-sign is drawn.

### [Fourteenth embodiment]

When a menu including "mail", "telephone directory", "browser", "One seg", "Java (registered trademark)", and "camera" is displayed on said display screen, and a N-sign is drawn on said display screen, it is judged the N-sign is drawn and confirms that a mail function is initiated. When a logical product-sign is drawn on said display screen, it is judged the logical product-sign is drawn and confirms that a telephone directory function is initiated. When a e-sign is drawn on said display screen, it is judged the e-sign is drawn and confirms that a browser function is initiated. When a decrescendo-sign is drawn on said display screen, it is judged the decrescendo-sign is drawn and confirms that a One seg function is initiates. When a circle-sign is drawn on said display screen, it is judged the circle-sign is drawn and confirms that a Java (the registered trademark) function is initiated. And when a Z-sign is drawn on said display screen, it is judged the Z-sign is drawn and confirms that a camera function is initiates.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2008-226492, filed on September 3, 2008, the disclosure of which is incorporated herein in its entirety by reference.

### [Availability in the industry]

While the application to the portable device has been described, the present invention can also be applied to portable devices such as mobile phones, PDAs (Personal Digital Assistant), PHSs (Personal Handy-phone System), DECTs (Digital Enhanced Cordless Telecommunications), portable audio players, portable video players, handheld game machines, and electronic dictionaries or the like.

### DESCRIPTION OF THE CODES

- 100: gesture operation input device
- 101: pointing device
- 102: control unit
- 102A: gesture judgment unit
- 102B: cell setting unit
- 103: memory unit
- 103A: gesture route rule storage unit
- 103B: operation route information storage unit
- 104: display screen
- 0101, 0120, 0103..., 0301, 0302, and 0303: matrix number of cell

## Claims

1. A gesture operation input device which executes an input operation of information on a display screen via a pointing device, wherein at least two cells to which identification information is attached respectively are set on said display screen, **characterized by** comprising:
a gesture route rule storage unit which stores a gesture route rule that defines a route of said cell which is traced on said display screen at an input operation by said identification information on each cell for a gesture including graphics and signs;
an operation route information storage unit which temporarily stores said identification information of each designated cell as the route information of input operation when said cell in said display screen is successively selected by said pointing device in accordance with input of the gesture on said display screen; and
a gesture judgment unit which judges that a gesture drawn on said display screen is the gesture defined by said gesture route rule in a case when said gesture route rule and the route information of said input operation are compared and accorded.

2. The gesture operation input device according to claim 1, **characterized in that**
identification information of the cell which is further caused by input operational fluctuations is added when tracing to said gesture route rule, and
said gesture judgment unit ignores the identification information of input operational fluctuation cells and compares said gesture route rule with the route information of said input operation in a case that the identification information of the cell which is traced by said input operational fluctuation is included in the route information of input operation stored in said operation route information storage unit after the input of the gesture to said display screen.

3. The gesture operation input device according to claim 1, **characterized in that** said pointing device includes a touch panel or a mouse.

4. The gesture operation input device according to claim 1, further comprising said cell setting unit which sets said display screen to a matrix of cells includes three lines by three columns.

5. The gesture operation input device according to claim 1, **characterized in that** a gesture route rule stored in said gesture route rule storage unit includes a gesture route rule of circle-sign, crescendo-sign, decrescendo-sign, logical sum-sign, logical product-sign, Z-sign, N-sign, and e-sign.

6. The gesture operation input device according to claim 2, **characterized in that** a gesture route rule stored in said gesture route rule storage unit is recorded, added, and modified via the internet.

7. A gesture operation input method performing an input operation of information on a display screen via a pointing device, **characterized by** comprising:
a step which sets at least two cells wherein identification information are respectively assigned thereof on said display screen;
a step which temporarily stores said identification information on each designated cell as a route information of input operation when said cell in said display screen is successively designated by said pointing device in accordance with input of the gesture on said display screen; and
a step which compares the gesture route rule which defines a traced route of said cell on said display screen at the input operation by said identification information on each cell with the route information on said input operation, and judges that the gesture drawn on said display screen is the gesture defined by said gesture route rule when those accord concerning the gesture including the graphic and the sign

8. A gesture operation input program performing an input operation of information on a display screen via a pointing device, **characterized by** comprising:
a procedure which sets at least two cells wherein identification information are respectively assigned thereof on said display screen;
a procedure which temporarily stores said identification information on each designated cell as a route information of input operation when said cell in said display screen is successively designated by said pointing device in accordance with input of the gesture on said display screen; and
a procedure which compares the gesture route rule which defines a traced route of said cell on said display screen at the input operation by said identification information on each cell with the route information on said input operation, and judges that the gesture drawn on said display screen is the gesture defined by said gesture route rule when those accord concerning the gesture including the graphic and the sign.

9. A portable device which executes an input operation of information on a display screen via a pointing device, wherein at least two cells to which identification information is attached respectively are set on said display screen, **characterized by** comprising:
a gesture route rule storage unit which stores a gesture route rule that defines a route of said cell which is traced on said display screen at an input operation by said identification information on each cell for a gesture including graphics and signs;
an operation route information storage unit which temporarily stores said identification information of each designated cell as the route information of input operation when said cell in said display screen is successively selected by said pointing device in accordance with input of the gesture on said display screen; and
a gesture judgment unit which judges that a gesture drawn on said display screen is the gesture defined by said gesture route rule in a case when said gesture route rule and the route information of said input operation are compared and accorded.

10. The portable device according to claim 9, **characterized in that**
at least two dialogue boxes are displayed on said display screen,
specific graphics are assigned to said dialogue boxes respectively,
a graphic is determined that it is drawn when a specific graphic is drawn on said display screen, and
corresponding said dialogue box is recognized that it is selected.

11. The portable device according to claim 9, **characterized in that**
at least two menu icons are displayed on said display screen,
specific graphics are assigned to said menu icons respectively,
a graphic is determined that it is drawn when a specific graphic is drawn on said display screen, and
corresponding said menu icon is recognized that it is selected.
